# EUROPEAN PATENT APPLICATION

(11) **EP 3 684 089 A1**
(43) Date of publication of application: **22.07.2020**
(21) Application number: 18860579.4
(22) Date of filing: 28.09.2018
(51) Int. Cl.: H04W 12/10, H04L 5/00

(54) **METHOD AND DEVICE FOR DATA TRANSMISSION**

(30) Priority: 28.09.2017 CN 201710900775
(71) Applicant: Huawei Technologies Co., Ltd., Longgang District Shenzhen, Guangdong 518129 (CN)
(72) Inventor: YOU, Chunhua, Shenzhen Guangdong 518129 (CN); ZHAO, Li, Shenzhen Guangdong 518129 (CN)
(74) Representative: Maiwald Patent- und Rechtsanwaltsgesellschaft mbH
(86) International application number: PCT/CN2018/108272
(87) International publication number: WO 2019/062838

(57) **Abstract**

This application provides a data transmission method and an apparatus. The method includes: receiving first indication information sent by a network device, where the first indication information includes identifier information of a first HARQ process and information about a first resource; sending first data of the first HARQ process on the first resource based on the first indication information; sending data of the first HARQ process based on an instruction of the network device within a preset time after the first data is sent; and sending data of the first HARQ process on a second resource after the preset time ends, where the second resource is used for scheduling-free transmission. Therefore, after a terminal device performs scheduling transmission, a HARQ process can be prevented from being blocked, so that the terminal device can continue to perform scheduling-free transmission.

## Description

This application claims priority to Chinese Patent Application No. 201710900775.8, filed with the Chinese Patent Office on September 28, 2017 and entitled "DATA TRANSMISSION METHOD AND APPARATUS", which is incorporated herein by reference in its entirety.

### TECHNICAL FIELD

This application relates to the field of communications technologies, and in particular, to a data transmission method and an apparatus.

### BACKGROUND

The 3rd generation partnership project (The 3rd Generation Partnership Project, 3GPP) defines three frame structures in a long term evolution (Long Term Evolution, LTE) system. In a frame structure FS3 (Frame structure 3) in the three frame structures, both uplink transmission and downlink transmission are performed on one spectrum resource. The frame structure FS3 has a flexible uplink-downlink subframe configuration, and is mainly used in licensed assisted access (licensed assisted access, LAA) cells and is used in unlicensed (unlicensed) frequency bands. In these unlicensed frequency bands, all terminal devices or network devices ensure coexistence and fair sharing of these frequency bands by using a listen before talk (listen before talk, LBT) mechanism. LBT may be understood as idle channel detection. Before sending data, a terminal device or a network device needs to perform idle channel detection, and sends the data only when an idle channel is detected. After each time LBT succeeds, a time for sending the data by the terminal device or the network device cannot exceed a maximum channel occupancy time specified in a standard protocol. After successfully obtaining the channel through LBT, the network device flexibly determine an uplink-downlink subframe configuration through division based on uplink and downlink traffic, that is, uses an FS3.

In the related art, a terminal device may perform uplink transmission based on scheduling transmission and scheduling-free transmission. A scheduling transmission process is as follows: When uplink data arrives at the terminal device but the terminal device has no uplink transmission resource, the terminal device sends a scheduling request (scheduling request, SR) to a network device. After receiving the SR, the network device sends, to the terminal device, an uplink grant (UL grant) carried on a physical downlink control channel (Physical downlink control channel, PDCCH). The UL grant carried on the PDCCH is used to allocate an uplink transmission resource. Finally, the terminal device sends the uplink data to the network device based on the uplink transmission resource allocated by the network device. A scheduling-free transmission process is as follows: The terminal device sends the uplink data to the network device based on a scheduling-free transmission resource and the LBT mechanism.

After the terminal device performs scheduling transmission, a hybrid automatic repeat request (Hybrid Automatic Repeat reQuest, HARQ) process is blocked. Consequently, the terminal device cannot perform scheduling-free transmission.

### SUMMARY

This application provides a data transmission method and an apparatus, to implement that after a terminal device performs scheduling transmission, a HARQ process is prevented from being blocked, so that the terminal device can perform scheduling-free transmission.

According to a first aspect, this application provides a data transmission method, including: receiving first indication information sent by a network device, where the first indication information includes identifier information of a first HARQ process and information about a first resource; then sending first data of the first HARQ process on the first resource based on the first indication information; then sending data of the first HARQ process based on an instruction of the network device within a preset time after the first data is sent; and sending data of the first HARQ process on a second resource after the preset time ends, where the second resource is used for scheduling-free transmission.

According to the data transmission method provided in the first aspect, after sending, based on scheduling transmission, the first data of the first HARQ process on the first resource scheduled by the network device, a terminal device sends the data of the first HARQ process based on the instruction of the network device within the preset time after sending the first data, and after the preset time ends, sends the data of the first HARQ process on a scheduling-free transmission resource. Therefore, after the terminal device performs scheduling transmission, the HARQ process can be prevented from being blocked, so that the terminal device can continue to perform scheduling-free transmission.

In a possible design, the sending data of the first HARQ process based on an instruction of the network device includes: receiving second indication information sent by the network device, where the second indication information includes the identifier information of the first HARQ process and information about a third resource; and sending second data of the first HARQ process on the third resource based on the second indication information.

In a possible design, the sending data of the first HARQ process based on an instruction of the network device includes: skipping sending the data of the first HARQ process on a fourth resource, where the fourth resource is used for scheduling-free transmission. In a possible design, the method further includes: clearing a HARQ buffer of the first HARQ process when the preset time ends or after the preset time ends.

In a possible design, the sending data of the first HARQ process based on an instruction of the network device within a preset time after the first data is sent includes: starting a timer after the first data is sent, and sending the data of the first HARQ process based on the instruction of the network device within a running period of the timer; and the sending data of the first HARQ process on a second resource after the preset time ends includes: sending the data of the first HARQ process on the second resource after the timer expires.

In a possible design, the method further includes: restarting the timer within the running period of the timer when the instruction of the network device is received.

According to the data transmission method provided in this implementation, the preset time is specified by using the timer. Therefore, after the terminal device performs scheduling transmission, a HARQ process is prevented from being blocked, so that the terminal device can continue to perform scheduling-free transmission.

In a possible design, the method further includes: generating the first data based on a sequence of data multiplexing priorities and the first resource, where the sequence of data multiplexing priorities in descending order is:
a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, where P is a channel access priority class determined by the terminal device, and P is a natural number.

In a possible design, the first indication information and/or the second indication information includes a new transmission indication, or the first indication information and/or the second indication information includes a retransmission indication. According to a second aspect, this application provides a terminal device, including: a receiving module, configured to receive first indication information sent by a network device, where the first indication information includes identifier information of a first HARQ process and information about a first resource; a first sending module, configured to send first data of the first HARQ process on the first resource based on the first indication information; and a second sending module, configured to send data of the first HARQ process based on an instruction of the network device within a preset time after the first sending module sends the first data, where the second sending module is further configured to send data of the first HARQ process on a second resource after the preset time ends, where the second resource is used for scheduling-free transmission.

In a possible design, the receiving module is configured to receive second indication information sent by the network device, where the second indication information includes the identifier information of the first HARQ process and information about a third resource; and the second sending module is configured to send second data of the first HARQ process on the third resource.

In a possible design, the sending data of the first HARQ process based on an instruction of the network device within a preset time after the first sending module sends the first data includes: skipping sending the data of the first HARQ process on a fourth resource, where the fourth resource is used for scheduling-free transmission.

In a possible design, the terminal device further includes a processing module, configured to clear a HARQ buffer of the first HARQ process when the preset time ends or after the preset time ends.

In a possible design, the second sending module is specifically configured to: start a timer after the first data is sent, and send the data of the first HARQ process based on the instruction of the network device within a running period of the timer; and send the data of the first HARQ process on the second resource after the timer expires.

In a possible design, the second sending module is further configured to restart the timer within the running period of the timer when the receiving module receives the instruction of the network device.

In a possible design, the terminal device further includes a generation module, configured to generate the first data based on a sequence of data multiplexing priorities and the first resource, where the sequence of data multiplexing priorities in descending order is:
a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, where P is a channel access priority class determined by the terminal device, and P is a natural number.

In a possible design, the first indication information and/or the second indication information includes a new transmission indication, or the first indication information and/or the second indication information includes a retransmission indication.

For beneficial effects of the terminal device provided in the second aspect and the possible designs of the second aspect, refer to the beneficial effects brought by the first aspect and the possible implementations of the first aspect. Details are not described herein again.

According to a third aspect, this application provides a terminal device, including:
a receiver, configured to receive first indication information sent by a network device, where the first indication information includes identifier information of a first HARQ process and information about a first resource; and
a transmitter, configured to send first data of the first HARQ process on the first resource based on the first indication information, where
the transmitter is further configured to send data of the first HARQ process based on an instruction of the network device within a preset time after sending the first data; and
the transmitter is further configured to send data of the first HARQ process on a second resource after the preset time ends, where the second resource is used for scheduling-free transmission.

In a possible design, the receiver is configured to receive second indication information sent by the network device, where the second indication information includes the identifier information of the first HARQ process and information about a third resource; and
the transmitter is configured to send second data of the first HARQ process on the third resource based on the second indication information.

In a possible design, the sending data of the first HARQ process based on an instruction of the network device within a preset time after sending the first data includes:
skipping sending the data of the first HARQ process on a fourth resource, where the fourth resource is used for scheduling-free transmission.

In a possible design, the transmitter is configured to:
clear a HARQ buffer of the first HARQ process when the preset time ends or after the preset time ends.

In a possible design, the transmitter is specifically configured to:
start a timer after sending the first data, and send the data of the first HARQ process based on the instruction of the network device within a running period of the timer; and
send the data of the first HARQ process on the second resource after the timer expires.

In a possible design, the transmitter is further configured to:
restart the timer within the running period of the timer when the receiver receives the instruction of the network device.

In a possible design, the terminal device further includes:
a processor, configured to generate the first data based on a sequence of data multiplexing priorities and the first resource, where the sequence of data multiplexing priorities in descending order is:
a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, where P is a channel access priority class determined by the terminal device, and P is a natural number. In a possible design, the first indication information and/or the second indication information includes a new transmission indication, or the first indication information and/or the second indication information includes a retransmission indication.

For beneficial effects of the terminal device provided in the third aspect and the possible designs of the third aspect, refer to the beneficial effects brought by the first aspect and the possible implementations of the first aspect. Details are not described herein again. According to a fourth aspect, this application provides a readable storage medium. The readable storage medium stores an executable instruction, and when at least one processor of a terminal device executes the executable instruction, the terminal device performs the data transmission method in any of the first aspect and the possible designs of the first aspect.

According to a fifth aspect, this application provides a program product. The program product includes an executable instruction, and the executable instruction is stored in a readable storage medium. At least one processor of the terminal device may read the executable instruction in the readable storage medium, and the at least one processor executes the executable instruction, so that the terminal device implements the data transmission method in any of the first aspect and the possible designs of the first aspect. According to a sixth aspect, this application provides an apparatus, applied to the terminal device, and including: at least one processor and a memory coupled to the at least one processor. The memory is configured to store an instruction, and the at least one processor is configured to execute the stored instruction, to enable the terminal device to perform the data transmission method in any of the first aspect and the possible designs of the first aspect in this application.

### BRIEF DESCRIPTION OF DRAWINGS

FIG. 1 is a schematic architectural diagram of a communications system;
FIG. 2 is a flowchart of an embodiment of a data transmission method according to this application;
FIG. 3 is a flowchart of an embodiment of another data transmission method according to this application;
FIG. 4 is a schematic diagram of a transmission process corresponding to FIG. 3 in which scheduling-free transmission is switched to scheduling transmission and switched again to scheduling-free transmission;
FIG. 5 is a flowchart of an embodiment of another data transmission method according to this application;
FIG. 6 is a schematic diagram of a transmission process corresponding to FIG. 5 in which scheduling-free transmission is switched to scheduling transmission and switched again to scheduling-free transmission;
FIG. 7 is a schematic structural diagram of an embodiment of a terminal device according to this application;
FIG. 8 is a schematic structural diagram of an embodiment of another terminal device according to this application;
FIG. 9 is a schematic structural diagram of an embodiment of another terminal device according to this application;
FIG. 10 is a schematic structural diagram of another terminal device according to this application; and
FIG. 11 is a schematic structural diagram of another terminal device according to this application.

### DESCRIPTION OF EMBODIMENTS

The embodiments of this application may be applied to a wireless communications system. It should be noted that the wireless communications system in the embodiments of this application includes but is not limited to: a narrowband internet of things (Narrow Band- Internet of Things, NB-IoT) system, a global system for mobile communications (Global System for Mobile Communications, GSM), an enhanced data rates for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a long term evolution (Long Term Evolution, LTE) system, and a fifth-generation mobile communications (the 5th Generation mobile communication technology, 5G) system.

Communications apparatuses in this application mainly include a network device and a terminal device. In the embodiments of this application, the terminal device (terminal device) includes but is not limited to a mobile station (MS, Mobile Station), a mobile terminal (Mobile Terminal), a mobile telephone (Mobile Telephone), a handset (handset), portable equipment (portable equipment), and the like. The terminal device may communicate with one or more core networks through a radio access network (RAN, Radio Access Network). For example, the terminal device may be a mobile telephone (or referred to as a "cellular" telephone), or a computer having a communication function; and the terminal device may alternatively be a portable, pocket-sized, handheld, computer built-in, or vehicle-mounted mobile apparatus or device.

In the embodiments of this application, the network device may be a device configured to communicate with the terminal device. The network device may be a base transceiver station (Base Transceiver Station, BTS) in a GSM system or a CDMA system, may be a NodeB (NodeB, NB) in a WCDMA system, or may be an evolved NodeB (Evolutional Node B, eNB or eNodeB) in an LTE system. Alternatively, the network device may be a relay station, an access point, a vehicle-mounted device, a wearable device, a network side device in a future 5G network, a network device in a future evolved public land mobile network (Public Land Mobile Network, PLMN), or the like.

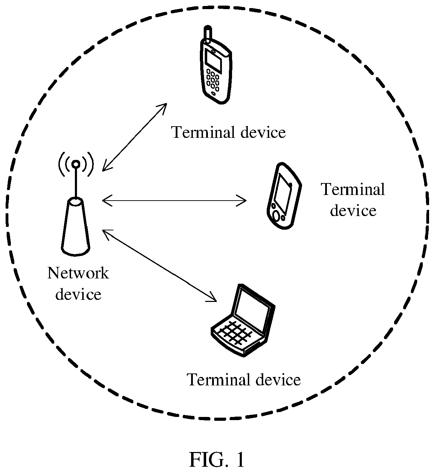

In the embodiments of this application, "a plurality of' refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. FIG. 1 is a schematic architectural diagram of a communications system. As shown in FIG. 1, the communications system in this application may include a network device and a terminal device. The network device communicates with the terminal device.

In the related art, a terminal device may perform uplink transmission based on scheduling transmission and scheduling-free transmission. Scheduling uplink transmission is that the terminal device can perform uplink transmission only when the terminal device receives an uplink grant (UL grant) sent by a network device on a PDCCH. The UL grant carried on the PDCCH is used to allocate an uplink transmission resource. For scheduling-free transmission, data transmission does not need to be performed based on a scheduling resource of the network device. In coexistence of the two transmission mechanisms, after the terminal device performs scheduling transmission for one time, after an automatic uplink HARQ process converts into an uplink scheduling HARQ process, a problem that the terminal device cannot perform scheduling-free transmission because a hybrid automatic repeat request HARQ process is blocked may exist; or scheduling transmission is also performed before this time of scheduling transmission. To resolve the problem, this application provides a data transmission method. After a terminal device performs scheduling transmission, a HARQ process is prevented from being blocked, so that the terminal device can continue to perform scheduling-free transmission. The following describes the solutions in this application in detail with reference to the accompanying drawings.

In the embodiments of this application, for example, there are two groups of HARQ processes (process), a group HARQ 1 is used for scheduling uplink transmission, and a group HARQ 2 is used for scheduling-free uplink transmission. Optionally, the group HARQ 1 is a subset of the group HARQ 2. For example, HARQ processes included in the group 1 are a HARQ process 1, a HARQ process 2, and a HARQ process 3, and HARQ processes included in the group 2 are a HARQ process 1 and a HARQ process 2. The following embodiments of this application are mainly for HARQ processes that may be used for performing scheduling transmission and scheduling-free transmission, for example, the HARQ process 1 and the HARQ process 2. If the HARQ processes that may be used for scheduling transmission and scheduling-free transmission include a plurality of HARQ processes, a respective processing process is performed for each of the plurality of HARQ processes. A processing process of only one HARQ process is described in the following embodiments.

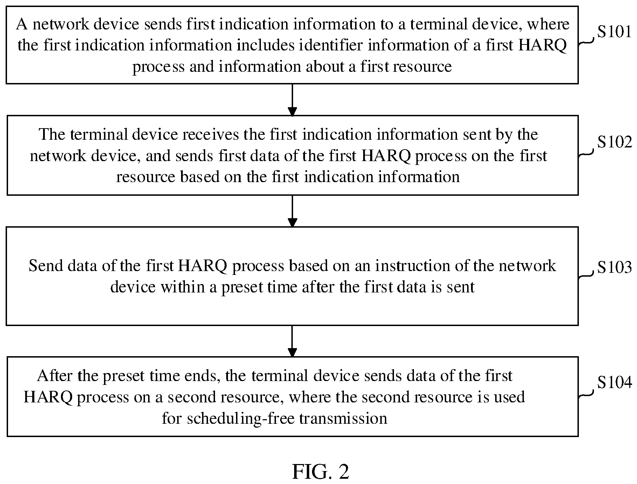

FIG. 2 is a flowchart of an embodiment of a data transmission method according to this application. As shown in FIG. 2, the method in this embodiment may include the following steps.

S101. A network device sends first indication information to a terminal device, where the first indication information includes identifier information of a first HARQ process and information about a first resource.

Optionally, the first indication information may further include a new transmission indication or a retransmission indication.

S102. The terminal device receives the first indication information sent by the network device, and sends first data of the first HARQ process on the first resource based on the first indication information.

The first indication information may be sent on a PDCCH, and the first data may be a media access control protocol data unit (Medium access control protocol data unit, MAC PDU). The indication information includes, for example, information about a HARQ process 1 and information about the first resource.

Specifically, the terminal device sends the first data of the first HARQ process on some resources in the first resource.

If the first indication information indicates new transmission, the first data is generated based on the first indication information. Optionally, in this embodiment, the first data is generated based on a sequence of data multiplexing priorities and the first resource, where data having a high data multiplexing priority is first transmitted, and for an unlicensed spectrum cell, the sequence of data multiplexing priorities in descending order may be: a buffer status report (Buffer status report, BSR) media access control layer (Media access control, MAC) control element (control element, CE), a power headroom report (power headroom report, PHR) MAC CE, data that is associated with a channel access priority class less than or equal to P and that can be transmitted on the first resource, data that is associated with a channel access priority class greater than P and that can be transmitted on the first resource, and a padding (Padding) BSR, where P is a channel access priority class determined by the terminal device. The padding BSR is generated only under the following conditions: when an uplink resource includes padding (Padding) bits (bits), and the padding bits are greater than or equal to a sum of a size of the padding BSR and a subheader of the padding BSR. P=3 is used as an example. Channel access priority classs less than or equal to P are 1, 2, and 3. Data associated with the channel access priority class 1 includes, for example, data corresponding to a data type 1, data associated with the channel access priority class 2 includes, for example, data corresponding to a data type 2 and data corresponding to a data type 3, and data associated with the channel access priority class 3 includes, for example, data corresponding to a data type 4 and data corresponding to a data type 5. Therefore, the data associated with the channel access priority classs less than or equal to P includes the data corresponding to data type 1, the data type 2, the data type 3, the data type 4, and the data type 5. If data that cannot be transmitted on the first resource is the data corresponding to the data type 2, the data that can be transmitted on the first resource includes at least one of data corresponding to the data type 1, the data type 3, the data type 4, and the data type 5.

A data multiplexing priority is a transmission priority when the terminal device allocates a resource. The priority determines whether data of a specific data type can be transmitted on a grant-free resource, and an amount of the data that can be transmitted. The data may be quantified by using a quality of service class identifier (Quality of service class identifier, QCI).

It is assumed that a QCI of to-be-transmitted data in an uplink buffer of the terminal device is 8. The terminal device determines, based on a correspondence shown in Table 1, that a channel access priority class is 3. In Table 1, a channel access priority class 4 has no corresponding QCI.

**Table 1**

| Channel access priority class | QCI |
|---|---|
| 1 | 1, 3, 5, 65, 66, 69, 70 |
| 2 | 2, 7 |
| 3 | 4, 6, 8, 9 |
| 4 | - |

It should be noted that in this embodiment, only priorities of data of the foregoing types are limited, and a priority of data of another type is not limited.

For example, there are five data multiplexing priorities in total, and a sequence of the priorities is: 1>2>3>4>5. For example, when the first resource is insufficient, data corresponding to the priority 1 and data corresponding to the priority 2 are first generated. To be specific, when allocating a resource, the terminal device considers the foregoing data multiplexing priority rule, and preferentially allocates a resource to data having a high priority. Optionally, for data of two types, to be specific, data that is associated with a channel access priority class greater than P and that can be transmitted on the first resource and a padding BSR, a prioritized bit rate (Prioritized bit rate, PBR) of data of each logical channel corresponding to the data of the two types is preferentially ensured, and then if there is still a remaining resource, resource allocation is performed based on the sequence of data multiplexing priorities in descending order. A data multiplexing rule of other licensed spectrum cells is not limited in this embodiment.

After generating the first data, the terminal device stores the first data in a HARQ buffer associated with the first HARQ process, and sends the first data of the first HARQ process on the first resource based on the first indication information.

If the first indication information indicates retransmission, it means that before this time of scheduling transmission, the first data has been generated, and scheduling transmission or scheduling-free transmission specific to the first data has been performed for the first HARQ process, but the network device does not successfully receive the first data. In this case, the first indication information is sent to the terminal device. After receiving the first indication information, the terminal device retransmits the first data of the first HARQ process on the first resource.

S103. Send data of the first HARQ process based on an instruction of the network device within a preset time after the first data is sent.

Specifically, in the first implementable manner, the sending data of the first HARQ process based on an instruction of the network device may be the following steps. S 1031. Receive second indication information sent by the network device, where the second indication information includes the identifier information of the first HARQ process and information about a third resource.

The first data and second data belong to the same HARQ process, and the first indication information and/or the second indication information may further include a new transmission indication, or the first indication information and/or the second indication information may further include a retransmission indication. When both the first indication information and the second indication information include a new transmission indication, the first data and the second data may be data generated based on different original data. When the second indication information includes a retransmission indication (the first data may be new transmitted data, or may be retransmitted data), the second data and the first data may be data generated based on same original data, and may be the same or different.

Within the preset time after the first data is sent, the second indication information may be received for a plurality of times, that is, the data of the first HARQ process is sent for a plurality of times within the preset time.

It should be noted that the third resource is a resource scheduled based on the second indication information, and is not necessarily within the preset time. It is possible that scheduling information (the second indication information) sent by the network device is received within the preset time, but a scheduled time domain resource is after a range of the preset time.

S1032. Send the second data of the first HARQ process on the third resource based on the second indication information.

In the second implementable manner, the sending data of the first HARQ process based on an instruction of the network device may be:
skipping sending data of the first HARQ process on a fourth resource within the preset time, where the fourth resource is used for scheduling-free transmission. The fourth resource may be some or all resources in the first resource, or a resource different from the first resource.

In the third implementable manner, the sending data of the first HARQ process based on an instruction of the network device may include sending manners in the foregoing two implementable manners, that is: sending second data on a third resource based on second indication information, and skipping sending data of the first HARQ process on a fourth resource within the preset time. The second data and the first data may be same or different data. Specifically, the data of the first HARQ process is not sent on the fourth resource (that is, a scheduling-free transmission resource), and the second indication information that is specific to the second data and that is sent by the network device is waited for. If the second indication information is received, the second data is sent on the third resource based on the second indication information, or if the second indication information that is specific to the second data and that is sent by the network device is not received, no operation is performed, waiting continues until the preset time ends, and S104 is performed.

S104. After the preset time ends, the terminal device sends data of the first HARQ process on a second resource, where the second resource is used for scheduling-free transmission.

Both the fourth resource and the second resource are scheduling-free transmission resources, a time domain resource location of the fourth resource and a time domain resource location of the second resource are different, and a frequency domain resource location of the fourth resource and a frequency domain resource location of the second resource may be the same or different.

Specifically, in this embodiment of this application, there are three transmission types. The first transmission type is scheduling-free transmission, and new transmission or retransmission may be performed on a scheduling-free resource. The second transmission type is performing new transmission or retransmission on a dynamic scheduling resource. The third transmission type is performing only new transmission on a semi-persistent or persistent resource. The scheduling-free resource is a semi-persistent resource or a persistent resource. The semi-persistent resource is a time-frequency resource jointly determined by using a radio resource control message and an activation command, the persistent resource is a time-frequency resource determined by using a radio resource control message, and the dynamic scheduling resource is a time-frequency resource determined by using physical layer signaling.

In this embodiment of this application, transmission of the first transmission type is not performed, and transmission of the second and/or third transmission type may be performed within the preset time.

Optionally, S104 may alternatively be: when the preset time ends or after the preset time ends, clearing a HARQ buffer of the first HARQ process, and sending data of the first HARQ process on the second resource. The terminal device can perform scheduling-free transmission on the second resource only when determining that the HARQ buffer is empty and there is data that can be transmitted on the second resource or a data amount of data that can be transmitted on the second resource is greater than or equal to a preset threshold.

In an implementable manner, a timer is used to specify the preset time, and S103 may be: starting a timer after the first data is sent, and sending the data of the first HARQ process based on the instruction of the network device within a running period of the timer. Further, within the running period of the timer, when the instruction of the network device is received, the timer is restarted after the second data is sent based on the instruction of the network device, to be specific, a process of S103 is re-performed. Optionally, S103 may alternatively be: starting a timer after X ms after the first data is sent, and sending the data of the first HARQ process based on the instruction of the network device within a running period of the timer. Further, within the running period of the timer, when the instruction of the network device is received, the timer is restarted after X ms after the second data is sent based on the instruction of the network device, to be specific, a process of S103 is re-performed. X is greater than or equal to 0. That the timer is started after X ms may save power for the terminal device. Correspondingly, S104 may be that after the timer expires, the terminal device sends the data of the first HARQ process on the second resource.

It should be noted that data transmission may be performed for the first HARQ process for at least one time within the preset time after the first data is sent, and if the data of the first HARQ process is sent for one time based on the instruction of the network device within the preset time after the first data is sent, for example, if the second data of the first HARQ process is sent, processes of S103 and S104 are re-performed within the preset time after the second data is sent.

According to the data transmission method provided in this embodiment, after sending, based on scheduling transmission, the first data of the first HARQ process on the first resource scheduled by the network device, the terminal device sends the data of the first HARQ process based on the instruction of the network device within the preset time after sending the first data, and after the preset time ends, sends the data of the first HARQ process on a scheduling-free transmission resource. Therefore, after the terminal device performs scheduling transmission, the HARQ process can be prevented from being blocked, so that the terminal device can continue to perform scheduling-free transmission.

The technical solution of the method embodiment shown in FIG. 2 are described in detail below by using a specific embodiment.

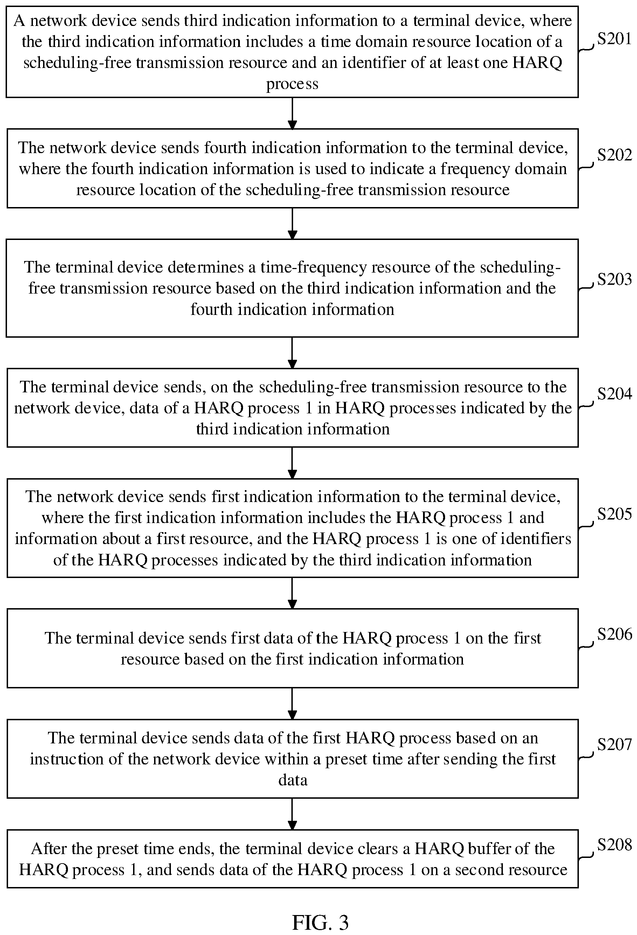

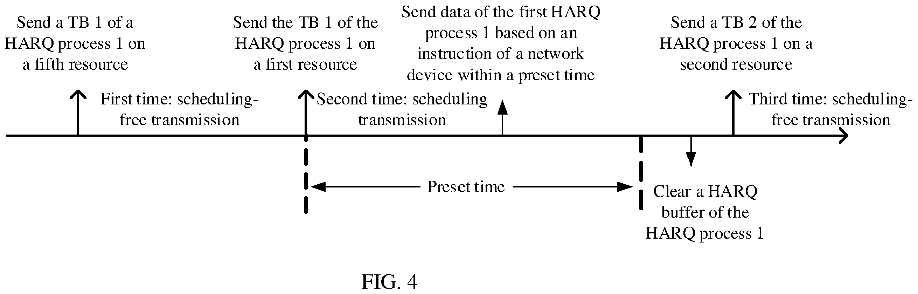

FIG. 3 is a flowchart of an embodiment of another data transmission method according to this application. In this embodiment, how a terminal device continues to perform scheduling-free transmission after switching from scheduling-free transmission to scheduling transmission is used as an example for description. FIG. 4 is a schematic diagram of a transmission process corresponding to FIG. 3 in which scheduling-free transmission is switched to scheduling transmission and then switched to scheduling-free transmission. With reference to FIG. 3 and FIG. 4, the method in this embodiment may include the following steps.

S201. A network device sends third indication information to the terminal device, where the third indication information includes a time domain resource location of a scheduling-free transmission resource and an identifier of at least one HARQ process. The time domain resource location includes a period and a start time unit, and the start time unit is any one of a subframe, a slot, a transmission time interval (TTI), and a symbol. The first indication may be carried in a radio resource control (RRC) message. The first indication information includes the identifier of the at least one HARQ process, for example, includes a HARQ process 1 and a HARQ process 2. For example, the first indication includes a period of 2 ms, and the start time unit is a subframe 0. In this case, all of the subframe 0, a subframe 2, a subframe 4, and the like are time domain resource locations for scheduling-free transmission. A frequency domain resource location is subsequently determined in second indication information.

S202. The network device sends the fourth indication information to the terminal device, where the fourth indication information is used to indicate a frequency domain resource location of the scheduling-free transmission resource.

S203. The terminal device determines a time-frequency resource of the scheduling-free transmission resource based on the third indication information and the fourth indication information.

S201 to S203 are an indication manner for the scheduling-free transmission resource, or another indication manner may alternatively be used, and this is not limited in this application.

S204. The terminal device sends, on the scheduling-free transmission resource (a fifth resource) to the network device, data, such as a TB 1 shown in FIG. 4, of a HARQ process 1 in HARQ processes indicated by the third indication information.

In this embodiment, an example in which the HARQ process 1 in the HARQ processes indicated by the third indication information is used for description, and a process of performing data transmission by using another HARQ process is the same.

If the scheduling-free resource is in an unlicensed spectrum cell, the terminal device needs to complete a channel access process before sending first data. The channel access process is an LBT process.

S205. The network device sends the first indication information to the terminal device, where the first indication information includes the HARQ process 1 and information about a first resource, and the HARQ process 1 is one of identifiers of the HARQ processes indicated by the third indication information.

The identifiers in this embodiment are digit sequence numbers 1, 2, and the like. The first resource is a resource used for scheduling transmission, and the information about the first resource includes a frequency domain resource, and optionally, may further include a time domain resource. The frequency domain resource of the scheduling-free transmission resource and the frequency domain resource of the resource used for scheduling transmission are completely the same, or partially the same, or completely different. This is not limited in this application. Optionally, the first indication information may further indicate an identifier of another HARQ process that is in the identifiers of the HARQ processes indicated by the third indication information, for example, indicate uplink transmission of a HARQ process 2. For example, the first indication information includes the HARQ process 1, a resource used for scheduling transmission that corresponds to the HARQ process 1, a new transmission indication or a retransmission indication corresponding to the HARQ process 1, a resource used for scheduling transmission that corresponds to the HARQ process 2, a new transmission indication or a retransmission indication corresponding to the HARQ process 2, and the like.

S206. The terminal device sends first data of the HARQ process 1 on the first resource based on the first indication information.

The first indication information may be sent on a PDCCH, and the first data may be a media access control protocol data unit (Medium access control protocol data unit, MAC PDU). The first indication information may include a new transmission indication or a retransmission indication. In this embodiment, an example in which the first indication information includes the retransmission indication is used, and the first data sent in S206 is the TB 1. As shown in FIG. 4, the terminal device sends the first data TB 1 of the HARQ process 1 on the first resource.

If the first indication information indicates new transmission, the first data needs to be generated based on a sequence of data multiplexing priorities and the first resource. Specifically, a generation manner in the embodiment shown in FIG. 2 may be used, and details are not described herein again.

S207. The terminal device sends data of the HARQ process 1 based on an instruction of the network device within a preset time after sending the first data.

Specifically, for example, in the first implementable manner in the embodiment shown in FIG. 2, the second indication information sent by the network device is received within the preset time. The second indication information includes the identifier of the HARQ process 1 and information about a third resource, and the second indication information may further include a new transmission indication or a retransmission indication. Using an example in which the second indication information includes a retransmission indication, for example, as shown in FIG. 4, the second indication information indicates retransmission of the TB 1. Within the preset time, data of the first HARQ process is not sent on the scheduling-free transmission resource. If within the preset time, the second indication information that includes a retransmission indication specific to the first data and that is sent by the network device is received, the first data of the HARQ process 1 is sent again on the third resource, and a preset time is collected again. If within the preset time, the second indication information that includes a new transmission indication and that is sent by the network device is received, second data of the HARQ process 1 is sent on the third resource, and a preset time is collected again. If the second indication information sent by the network device is not received, no operation is performed, waiting continues until the preset time ends, and S208 is performed.

S208. After the preset time ends, the terminal device clears a HARQ buffer of the HARQ process 1, and sends data of the HARQ process 1 on a second resource.

S208 may alternatively be that after the preset time ends, the terminal device sends the data of the HARQ process 1 on a second resource.

For example, as shown in FIG. 4, the terminal device regenerates a TB 2, and sends the data TB 2 of the HARQ process 1 on the second resource (a scheduling-free transmission resource). It should be noted that both the second resource used in S208 and the fifth resource used in S204 are scheduling-free resources, and time domain resources in the second resource and the fifth resource used in S204 are different.

In this embodiment, after the terminal device switches from scheduling-free transmission to scheduling transmission, the terminal device waits, within the preset time after a time at which the terminal device sends the data to the network device on the resource used for scheduling transmission and the HARQ process 1, for the retransmission indication that is specific to the first data and that is sent by the network device, and uplink data transmission is no longer performed on the scheduling-free transmission resource. After the preset time ends, the HARQ buffer of the HARQ process 1 is cleared, and data transmission is performed by using the HARQ process 1 on the scheduling-free transmission resource. Therefore, after the terminal device performs scheduling transmission, the HARQ process is prevented from being blocked, so that the terminal device can continue to perform scheduling-free transmission.

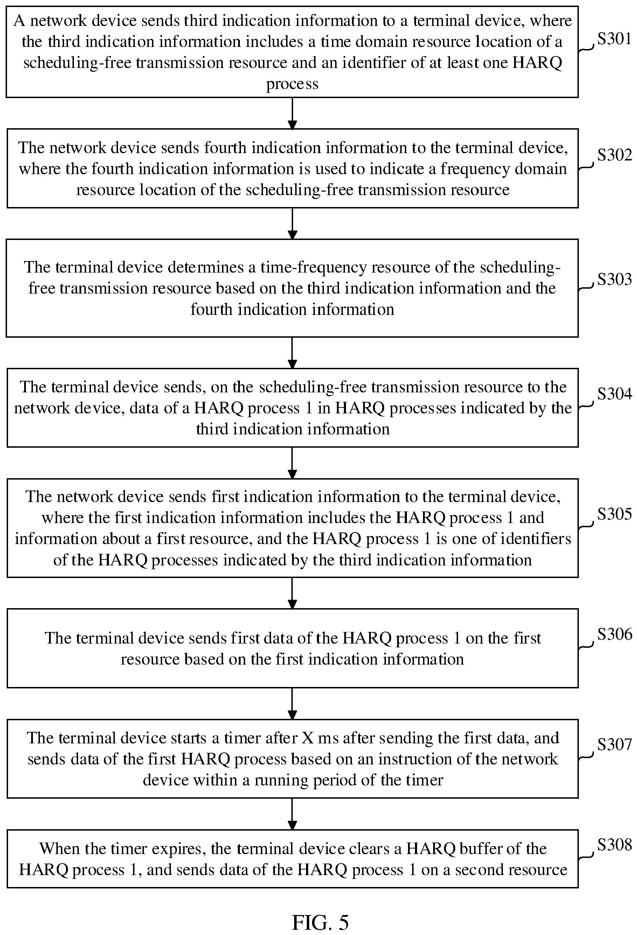

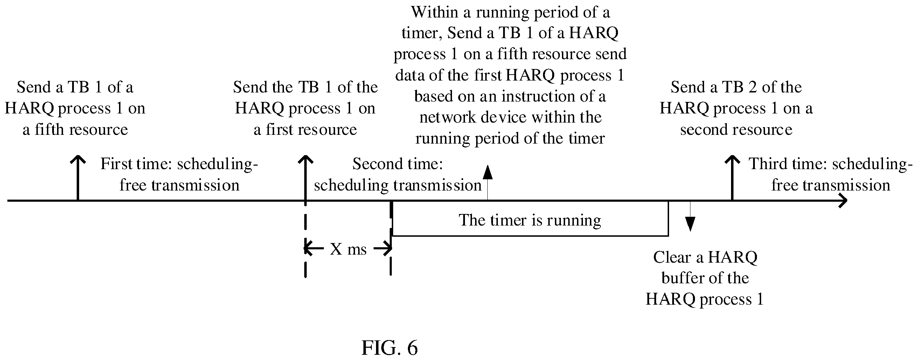

FIG. 5 is a flowchart of an embodiment of another data transmission method according to this application. In this embodiment, a preset time is specified by using a timer based on the method shown in FIG. 3. FIG. 6 is a schematic diagram of a transmission process corresponding to FIG. 5 in which scheduling-free transmission is switched to scheduling transmission and switched again to scheduling-free transmission. With reference to FIG. 5 and FIG. 6, the method in this embodiment may include the following steps.

S301 to S306 are the same as S201 to S206 shown in FIG. 3. For details, refer to the description in the embodiment shown in FIG. 3.

S307. The terminal device starts a timer after X ms after sending the first data, and sends data of the HARQ process 1 based on an instruction of the network device within a running period of the timer.

Specifically, for example, in the first implementable manner in the embodiment shown in FIG. 2, the second indication information sent by the network device is received within the running period of the timer. The second indication information includes the identifier of the HARQ process 1 and information about a third resource, and the second indication information may further include a new transmission indication or a retransmission indication. Using an example in which the second indication information includes a retransmission indication, for example, as shown in FIG. 6, the second indication information indicates retransmission of the TB 1. Within the preset time, data of the first HARQ process is not sent on the scheduling-free transmission resource. Within the running period of the timer, if the second indication information that includes a retransmission indication specific to the first data and that is sent by the network device is received, the timer is stopped, the first data of the HARQ process 1 is sent again on the third resource, and the timer is restarted. Within the running period of the timer, if the second indication information that includes a new transmission indication and that is sent by the network device is received, the timer is stopped, second data of the HARQ process 1 is sent on the third resource, and the timer is restarted.

If the second indication information sent by the network device is not received, no operation is performed, waiting continues until the timer expires, and S308 is performed. S308. When the timer expires, the terminal device clears a HARQ buffer of the HARQ process 1, and sends data of the HARQ process 1 on a second resource.

S308 may alternatively be that when the timer expires, the terminal device sends the data of the HARQ process 1 on a second resource.

For example, as shown in FIG. 6, the terminal device regenerates a TB 2, and sends the TB 2 on the second resource (a scheduling-free transmission resource) source by using the HARQ process 1 to the network device.

In the embodiments shown in FIG. 3 and FIG. 5, an example in which the terminal device switches from scheduling-free transmission to scheduling transmission is used. If scheduling transmission is also performed before the scheduling transmission, processes of S205 to S208 are directly performed, or processes of S305 to S308 are directly performed. Details are not described herein again. Therefore, after the terminal device performs scheduling transmission, therefore, a HARQ process is prevented from being blocked, so that the terminal device may continue to perform scheduling-free transmission.

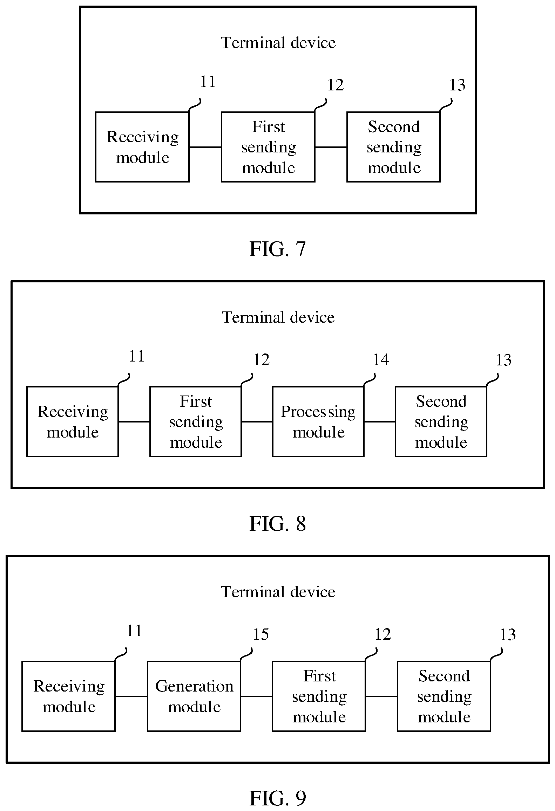

FIG. 7 is a schematic structural diagram of an embodiment of a terminal device according to this application. As shown in FIG. 7, in this embodiment, the terminal device may include a receiving module 11, a first sending module 12, and a second sending module 13. The receiving module 11 is configured to receive first indication information sent by a network device, where the first indication information includes identifier information of a first HARQ process and information about a first resource. The first sending module 12 is configured to send first data of the first HARQ process on the first resource based on the first indication information. The second sending module 13 is configured to send data of the first HARQ process based on an instruction of the network device within a preset time after the first sending module sends the first data, and the second sending module 13 is further configured to send data of the first HARQ process on a second resource after the preset time ends, where the second resource is used for scheduling-free transmission.

Optionally, the receiving module 11 is configured to receive second indication information sent by the network device, where the second indication information includes the identifier information of the first HARQ process and information about a third resource. The second sending module 13 is configured to send second data of the first HARQ process on the third resource.

Optionally, the sending data of the first HARQ process based on an instruction of the network device within a preset time after the first sending module 12 sends the first data includes: skipping sending data of the first HARQ process on a fourth resource, where the fourth resource is used for scheduling-free transmission.

The apparatus in this embodiment may be configured to execute the technical solutions of the method embodiment shown in FIG. 2. The implementation principles and technical effects are similar, and details are not described herein again.

FIG. 8 is a schematic structural diagram of an embodiment of another terminal device according to this application. As shown in FIG. 8, in this embodiment, based on a structure of the terminal device shown in FIG. 7, further, the terminal device may further include a processing module 14. The processing module 14 is configured to clear a HARQ buffer of the first HARQ process when the preset time ends or after the preset time ends.

Optionally, the second sending module 13 is specifically configured to: start a timer after the first data is sent, and send data of the first HARQ process based on the instruction of the network device within a running period of the timer; and send the data of the first HARQ process on the second resource after the timer expires.

Further, the second sending module 13 is further configured to restart the timer within the running period of the timer when the receiving module receives the instruction of the network device.

The apparatus in this embodiment may be configured to execute the technical solutions of the method embodiment shown in FIG. 2. The implementation principles are similar, and details are not described herein again.

FIG. 9 is a schematic structural diagram of an embodiment of another terminal device according to this application. As shown in FIG. 9, in this embodiment, based on a structure of the terminal device shown in FIG. 7, further, the terminal device may further include a generation module 15. The generation module 15 is configured to generate the first data based on a sequence of data multiplexing priorities and the first resource, where the sequence of data multiplexing priorities in descending order is: a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, where P is a channel access priority class determined by the terminal device, and P is a natural number.

In the foregoing embodiment, the first indication information and/or the second indication information includes a new transmission indication, or the first indication information and/or the second indication information includes a retransmission indication.

The apparatus in this embodiment may be configured to execute the technical solutions of the method embodiment shown in FIG. 2. The implementation principles are similar, and details are not described herein again.

In this application, the terminal device may be divided into function modules based on the foregoing method example. For example, function modules may be obtained through division based on corresponding functions, or two or more functions may be integrated into one processing module. The integrated module may be implemented in a form of hardware, or may be implemented in a form of a software function module. It should be noted that in the embodiments of this application, module division is an example, and is merely a logical function division. In actual implementation, another division manner may be used.

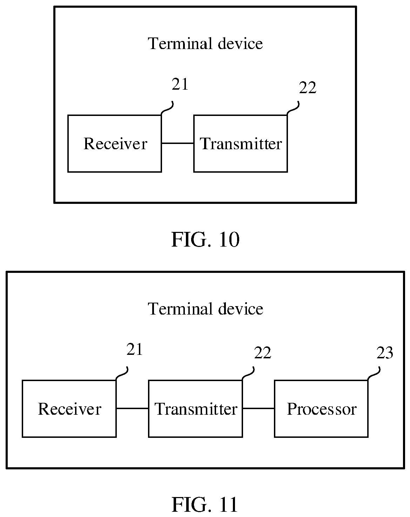

FIG. 10 is a schematic structural diagram of another terminal device according to this application. As shown in FIG. 10, the terminal device includes:
a receiver 21, configured to receive first indication information sent by a network device, where the first indication information includes identifier information of a first HARQ process and information about a first resource; a transmitter 22, configured to send first data of the first HARQ process on the first resource based on the first indication information, where the transmitter 22 is further configured to send data of the first HARQ process based on an instruction of the network device within a preset time after sending the first data. The transmitter 22 is further configured to send data of the first HARQ process on a second resource after the preset time ends, where the second resource is used for scheduling-free transmission.

Optionally, the receiver 21 is configured to receive second indication information sent by the network device, where the second indication information includes the identifier information of the first HARQ process and information about a third resource. The transmitter 22 is configured to send second data of the first HARQ process on the third resource based on the second indication information.

Optionally, the sending data of the first HARQ process based on an instruction of the network device within a preset time after sending the first data includes: skipping sending data of the first HARQ process on a fourth resource, where the fourth resource is used for scheduling-free transmission.

Optionally, the transmitter 22 is configured to clear a HARQ buffer of the first HARQ process when the preset time ends or after the preset time ends.

Optionally, the transmitter 22 is specifically configured to: start a timer after sending the first data, and send data of the first HARQ process based on the instruction of the network device within a running period of the timer; and send the data of the first HARQ process on the second resource after the timer expires.

Optionally, the transmitter 22 is further configured to restart the timer within the running period of the timer when the receiving module receives the instruction of the network device.

FIG. 11 is a schematic structural diagram of another terminal device according to this application. As shown in FIG. 11, based on the terminal device shown in FIG. 10, the terminal device may further include a processor 23. The processor is configured to generate the first data based on a sequence of data multiplexing priorities and the first resource, where the sequence of data multiplexing priorities in descending order is:
a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, where P is a channel access priority class determined by the terminal device, and P is a natural number.

Optionally, the first indication information and/or the second indication information includes a new transmission indication, or the first indication information and/or the second indication information includes a retransmission indication.

This application further provides a readable storage medium. The readable storage medium stores an executable instruction. When at least one processor of a terminal device executes the executable instruction, the terminal device performs the data transmission method provided in the foregoing implementations.

This application further provides a program product. The program product includes an executable instruction, and the executable instruction is stored in a readable storage medium. At least one processor of a terminal device can read the executable instruction from the readable storage medium, and the at least one processor executes the executable instruction, so that the terminal device implements the data transmission method provided in the foregoing implementations.

A person of ordinary skill in the art may understand that all or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. A data transmission method, comprising:
receiving first indication information sent by a network device, wherein the first indication information comprises identifier information of a first HARQ process and information about a first resource;
sending first data of the first HARQ process on the first resource based on the first indication information;
sending data of the first HARQ process based on an instruction of the network device within a preset time after the first data is sent; and
sending data of the first HARQ process on a second resource after the preset time ends, wherein the second resource is used for scheduling-free transmission.

2. The method according to claim 1, wherein the sending data of the first HARQ process based on an instruction of the network device comprises:
receiving second indication information sent by the network device, wherein the second indication information comprises the identifier information of the first HARQ process and information about a third resource; and
sending second data of the first HARQ process on the third resource based on the second indication information.

3. The method according to claim 1 or 2, wherein the sending data of the first HARQ process based on an instruction of the network device comprises:
skipping sending the data of the first HARQ process on a fourth resource, wherein the fourth resource is used for scheduling-free transmission.

4. The method according to any one of claims 1 to 3, wherein the method further comprises:
clearing a HARQ buffer of the first HARQ process when the preset time ends or after the preset time ends.

5. The method according to claim 1, wherein the sending data of the first HARQ process based on an instruction of the network device within a preset time after the first data is sent comprises:
starting a timer after the first data is sent, and sending the data of the first HARQ process based on the instruction of the network device within a running period of the timer; and
the sending data of the first HARQ process on a second resource after the preset time ends comprises:
sending the data of the first HARQ process on the second resource after the timer expires.

6. The method according to claim 5, wherein the method further comprises:
restarting the timer within the running period of the timer when the instruction of the network device is received.

7. The method according to claim 1, wherein the method further comprises:
generating the first data based on a sequence of data multiplexing priorities and the first resource, wherein the sequence of data multiplexing priorities in descending order is:
a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, wherein P is a channel access priority class determined by a terminal device, and P is a natural number.

8. The method according to claim 2, wherein the first indication information and/or the second indication information comprises a new transmission indication, or the first indication information and/or the second indication information comprises a retransmission indication.

9. A terminal device, comprising:
a receiving module, configured to receive first indication information sent by a network device, wherein the first indication information comprises identifier information of a first HARQ process and information about a first resource;
a first sending module, configured to send first data of the first HARQ process on the first resource based on the first indication information; and
a second sending module, configured to send data of the first HARQ process based on an instruction of the network device within a preset time after the first sending module sends the first data, wherein
the second sending module is further configured to send data of the first HARQ process on a second resource after the preset time ends, wherein the second resource is used for scheduling-free transmission.

10. The terminal device according to claim 9, wherein
the receiving module is configured to receive second indication information sent by the network device, wherein the second indication information comprises the identifier information of the first HARQ process and information about a third resource; and
the second sending module is configured to send second data of the first HARQ process on the third resource.

11. The terminal device according to claim 9 or 10, wherein the sending data of the first HARQ process based on an instruction of the network device within a preset time after the first sending module sends the first data comprises:
skipping sending the data of the first HARQ process on a fourth resource, wherein the fourth resource is used for scheduling-free transmission.

12. The terminal device according to any one of claims 9 to 11, wherein the terminal device further comprises:
a processing module, configured to clear a HARQ buffer of the first HARQ process when the preset time ends or after the preset time ends.

13. The terminal device according to claim 9, wherein the second sending module is specifically configured to:
start a timer after the first data is sent, and send the data of the first HARQ process based on the instruction of the network device within a running period of the timer; and
send the data of the first HARQ process on the second resource after the timer expires.

14. The terminal device according to claim 13, wherein the second sending module is further configured to:
restart the timer within the running period of the timer when the receiving module receives the instruction of the network device.

15. The terminal device according to claim 9, wherein the terminal device further comprises:
a generation module, configured to generate the first data based on a sequence of data multiplexing priorities and the first resource, wherein the sequence of data multiplexing priorities in descending order is:
a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, wherein P is a channel access priority class determined by the terminal device, and P is a natural number.

16. The terminal device according to claim 10, wherein the first indication information and/or the second indication information comprises a new transmission indication, or the first indication information and/or the second indication information comprises a retransmission indication.

17. A terminal device, comprising:
a receiver, configured to receive first indication information sent by a network device, wherein the first indication information comprises identifier information of a first HARQ process and information about a first resource; and
a transmitter, configured to send first data of the first HARQ process on the first resource based on the first indication information, wherein
the transmitter is further configured to send data of the first HARQ process based on an instruction of the network device within a preset time after sending the first data; and
the transmitter is further configured to send data of the first HARQ process on a second resource after the preset time ends, wherein the second resource is used for scheduling-free transmission.

18. The terminal device according to claim 17, wherein
the receiver is configured to receive second indication information sent by the network device, wherein the second indication information comprises the identifier information of the first HARQ process and information about a third resource; and
the transmitter is configured to send second data of the first HARQ process on the third resource based on the second indication information.

19. The terminal device according to claim 17 or 18, wherein the sending data of the first HARQ process based on an instruction of the network device within a preset time after sending the first data comprises:
skipping sending the data of the first HARQ process on a fourth resource, wherein the fourth resource is used for scheduling-free transmission.

20. The terminal device according to any one of claims 17 to 19, wherein the transmitter is configured to:
clear a HARQ buffer of the first HARQ process when the preset time ends or after the preset time ends.

21. The terminal device according to claim 17, wherein the transmitter is specifically configured to:
start a timer after sending the first data, and send the data of the first HARQ process based on the instruction of the network device within a running period of the timer; and
send the data of the first HARQ process on the second resource after the timer expires.

22. The terminal device according to claim 21, wherein the transmitter is further configured to:
restart the timer within the running period of the timer when the receiver receives the instruction of the network device.

23. The terminal device according to claim 17, further comprising:
a processor, configured to generate the first data based on a sequence of data multiplexing priorities and the first resource, wherein the sequence of data multiplexing priorities in descending order is:
a buffer status report BSR media access control layer control element MAC CE, a power headroom report PHR MAC CE, data that is associated with a channel access priority class less than or equal to P and that can be transmitted on the first resource, data that is associated with a channel access priority class greater than P and that can be transmitted on the first resource, and a padding BSR, wherein P is a channel access priority class determined by the terminal device, and P is a natural number.

24. The terminal device according to claim 18, wherein the first indication information and/or the second indication information comprises a new transmission indication, or the first indication information and/or the second indication information comprises a retransmission indication.

25. A readable storage medium, wherein the readable storage medium stores an executable instruction, and when at least one processor of a terminal device executes the executable instruction, the terminal device performs the data transmission method in any one of claims 1 to 8.

26. A program product, wherein the program product comprises an executable instruction, a readable storage medium stores the executable instruction, at least one processor of a terminal device can read the executable instruction in the readable storage medium, and the at least one processor executes the executable instruction, to enable the terminal device to implement the data transmission method in any one of claims 1 to 8.

27. An apparatus, applied to a terminal device, wherein the apparatus comprises at least one processor and a memory coupled to the at least one processor, the memory is configured to store an instruction, and the at least one processor is configured to execute the stored instruction, to enable the terminal device to perform the data transmission method in any one of claims 1 to 8.

28. A communications system, comprising a network device and the terminal device in any one of claims 17 to 24.
